# EUROPÄISCHE PATENTSCHRIFT

(11) **EP 1 960 647 B1**
(45) Veröffentlichungstag und Bekanntmachung des Hinweises auf die Patenterteilung: **24.06.2009**
(21) Anmeldenummer: 06840870.7
(22) Anmeldetag: 14.12.2006
(51) Int. Cl.: F02B 23/06, F02F 3/26

(54) **KOLBEN FÜR EINEN VERBRENNUNGSMOTOR UND VERFAHREN ZU SEINER HERSTELLUNG**
PISTON FOR AN INTERNAL COMBUSTION ENGINE AND METHOD FOR ITS PRODUCTION
PISTON POUR MOTEUR A COMBUSTION INTERNE ET PROCEDE POUR SA FABRICATION

(30) Priorität: 17.12.2005 DE 102005060547
(43) Veröffentlichungstag der Anmeldung: 27.08.2008
(73) Patentinhaber: Mahle International GmbH, 70376 Stuttgart (DE)
(72) Erfinder: GRÖSSLE, Alexander, 74930 Ittlingen (DE); HOCH, Thomas, 70435 Stuttgart (DE)
(74) Vertreter: Pohle, Reinhard
(86) Internationale Anmeldenummer: PCT/DE2006/002235
(87) Internationale Veröffentlichungsnummer: WO 2007/076802

(56) Entgegenhaltungen:
- EP-A- 0 641 927
- EP-A- 0 810 365
- EP-A2- 0 261 538
- JP-A- 10 184 451
- JP-A- 57 002 446

## Beschreibung

Die vorliegende Erfindung betrifft einen Kolben für einen Verbrennungsmotor, mit einer im Kolbenboden vorgesehenen Verbrennungsmulde, die eine umlaufende Hinterschneidung aufweist, wobei der die Hinterschneidung mit dem Kolbenboden verbindende umlaufende Muldenrand alternierend gerundete und scharfkantige Muldenrandbereiche aufweist.

Sowohl der Kolbenboden als auch der Muldenrand der Verbrennungsmulde eines Kolbens unterliegen während des Betriebs ungleichmäßigen, sich überlagernden mechanischen und thermischen Zug- und Druckspannungen. Diese Spannungen wirken insbesondere in der Kolbenbolzenachse und senkrecht zur Kolbenbolzenachse. Sie führen im Laufe der Zeit zu Werkstoffermüdungen, wodurch wiederum Risse entstehen.

Es wurden zahlreiche Gestaltungen des Muldenrandes vorgeschlagen, um die auf den Muldenrand wirkenden Spannungen zu vermindern oder zu neutralisieren. Die JP 10184451 zeigt eine Verbrennungsmulde, deren Muldenrand senkrecht zur Kolbenbolzenachse mit zwei Ausnehmungen versehen ist. In ähnlicher Weise ist die in der EP 0 261538 B1 offenbarte, Hinterschneidungen aufweisende Verbrennungsmulde eines Kolbens mit zwei Ausnehmungen, jedoch parallel zur Kolbenbolzenachse, versehen, wobei zusätzlich die Verbrennungsmulde zur Kolbenlängsachse versetzt angeordnet ist.

Es ist ferner bekannt, den Muldenrand mit scharfkantigen Übergängen zur Verbrennungsmulde einerseits und zum Kolbenboden andererseits zu versehen, um eine gute Verbrennung des Kraftstoffs mit möglichst geringem Schadstoffausstoß zu erreichen. Die EP 0 453 613 A1 beschreibt einen Kolben mit einer Hinterschneidungen aufweisenden Verbrennungsmulde, deren Muldenrand einen zylindrischen Abschnitt aufweist, welcher in einen sich zum Kolbenboden hin konisch erweiternden Außenabschnitt übergeht.

Der Nachteil solcher Ausgestaltungen besteht jedoch darin, dass durch die scharfkantige Ausgestaltung des Muldenrandes die mechanische Spannung erhöht und damit die Neigung zur Rissbildung vergrößert wird. Daher schlägt die EP 0 641 927 A1 vor, den Muldenrand einer Hinterschneidungen aufweisenden Verbrennungsmulde zumindest teilweise abzurunden, also mit unterschiedlichen Radien auszubilden, die fließend ineinander übergehen. Je kleiner der Radius gewählt wird, desto scharfkantiger ist der Muldenrand. In denjenigen Bereichen des Muldenrandes, in denen besonders hohe Spannungen auftreten, soll der Radius größer gewählt werden als in den übrigen Bereichen des Muldenrandes.

Die DE 199 52 868 A1 offenbart einen Kolben mit einer Hinterschneidungen aufweisenden Verbrennungsmulde, deren Muldenrand ebenfalls mit unterschiedlichen Radien ausgebildet ist. Zur Verbesserung der Kraftstoffzerstäubung weist der Muldenrand zusätzlich zylindrische Abschnitte auf, die scharfkantig in die Verbrennungsmulde und/oder den Kolbenboden übergehen. Um eine gute Kraftstoffzerstäubung zu erzielen, muss jedoch die Einspritzdüse so ausgerichtet werden, dass ihre Einspritzöffnungen zu den zylindrischen Abschnitten hin ausgerichtet sind. Gleichzeitig muss die Anordnung der zylindrischen Abschnitte an die Anzahl und Anordnung der Einspritzöffnungen angepasst sein.

Die Aufgabe der vorliegenden Erfindung besteht darin, einen Kolben bereitzustellen, der sowohl eine geringe Neigung zur Rissbildung aufweist als auch eine gute Kraftstoffverbrennung ermöglicht und der mit Einspritzdüsen mit unterschiedlicher Anzahl und/oder Anordnung von Einspritzöffnungen zusammenarbeiten kann.

Die Lösung besteht in einem Kolben mit den Merkmalen des Patentanspruchs 1 und einem Verfahren mit den Merkmalen des Patentanspruchs 12. Erfindungsgemäß ist vorgesehen, dass der umlaufende Muldenrand entlang seines gesamten Umfangs in eine ebene umlaufende Fläche übergeht, die ihrerseits entlang ihres gesamten Umfangs scharfkantig in die Hinterschneidung übergeht. Das erfindungsgemäße Verfahren zeichnet sich dadurch aus, dass in einem ersten Verfahrensschritt mit einem Drehwerkzeug eine Verbrennungsmulde mit einer umlaufenden Hinterschneidung und einem umlaufenden Muldenrand in den Kolbenboden eingedreht wird und dass in einem zweiten Verfahrensschritt zur Herstellung der gerundeten und scharfkantigen Muldenrandbereiche das Drehwerkzeug ausgehend vom Mittelpunkt der Verbrennungsmulde um einen definierten Betrag geradlinig radial nach außen versetzt wird.

Das erfindungsgemäße Prinzip besteht somit darin, dass zum einen der Muldenrand teilweise gerundet ist, um die auf ihn wirkenden Zug- bzw. Druckspannungen zu reduzieren, andererseits aber unterhalb des Muldenrandes eine ebene umlaufende Fläche vorgesehen ist, die dazu dient, den in Richtung der Verbrennungsmulde eingespritzten und auf die Fläche auftreffenden Kraftstoff möglichst optimal zu zerstäuben. Damit wird das Ziel erreicht, die Gefahr der Rissbildung zu reduzieren und eine gute Kraftstoffverbrennung zu ermöglichen. Gleichzeitig erlaubt es die ebene umlaufende Fläche, Einspritzdüsen mit Einspritzdüsen in beliebiger Anordnung zu verwenden, so dass die Gestaltung der Einspritzdüsen und die Gestaltung der Verbrennungsmulde nicht aufeinander abgestimmt sein müssen.

Das erfindungsgemäße Verfahren stellt eine besonders einfache Möglichkeit dar, den erfindungsgemäßen Kolben herzustellen. Die Gestaltung des Muldenrandes und der ebenen umlaufenden Fläche wird allein durch den vom Mittelpunkt der Verbrennungsmulde ausgehend radial nach außen gerichteten Versatz des Drehwerkzeugs erzielt. Aufwändige Nachbearbeitungen der Verbrennungsmulde sind daher nicht notwendig.

Vorteilhafte Weiterbildungen ergeben sich aus den Unteransprüchen.

Die Höhe der ebenen umlaufenden Fläche entlang der gerundeten Muldenrandbereiche kann geringer sein als entlang der scharfkantigen Muldenrandbereiche. Diese Ausgestaltung gestattet ein besonders einfaches Herstellungsverfahren, weil die ebene umlaufende Fläche entlang der gerundeten Muldenrandbereiche nicht in Richtung des Bodens der Verbrennungsmulde versetzt werden muss.

Vorzugsweise gehen die Bereiche geringerer Höhe und die Bereiche größerer Höhe der ebenen umlaufenden Fläche fließend ineinander über, um die Entstehung weiterer scharfer Kanten, welche die Gefahr der Rissbildung erhöhen könnten, zu vermeiden. Aus demselben Grund ist es von Vorteil, wenn auch die gerundeten und die scharfkantigen Muldenrandbereiche fließend ineinander übergehen.

Eine weitere vorteilhafte Weiterbildung sieht vor, dass die ebene umlaufende Fläche eine Zylindermantelfläche bildet, um eine noch bessere Zerstäubung des eingespritzten Kraftstoffs zu bewirken.

Die gerundeten Muldenrandbereiche können bspw. einen Radius von 2,0 bis 3.0 mm, vorzugsweise 2,4 bis 2,6 mm, aufweisen, während die scharfkantigen Muldenrandbereiche einen Radius von 0,5 bis 1,5 mm, vorzugsweise 0,75 bis 1,25 mm, aufweisen können. Die Dimensionierung hängt letztlich von den Anforderungen des Einzelfalls ab. Dementsprechend kann das Drehwerkzeug bspw. über einen Betrag von 0,5 bis 2,5 mm, vorzugsweise 1 mm bis 2 mm, versetzt werden.

Der Mittelpunkt der Verbrennungsmulde kann in der Kolbenachse liegen, das heißt, die Verbrennungsmulde ist gegenüber der Kolbenachse nicht versetzt.

Eine zweckmäßige Weiterbildung sieht vor, dass der Muldenrand zwei in der Kolbenbolzenachse einander gegenüberliegende gerundete Muldenrandbereiche und zwei senkrecht zur Kolbenbolzenachse einander gegenüberliegende scharfkantige Muldenrandbereiche aufweist. Diese Ausgestaltung ist besonders einfach herzustellen, da das Drehwerkzeug nur entlang der Kolbenbolzenachse, ausgehend vom Mittelpunkt der Verbrennungsmulde in beide Richtungen, versetzt werden muss.

Der Kolbenboden kann ferner mit einer oder mehreren Ventilnischen versehen sein, die zweckmäßigerweise den umlaufenden Muldenrand in einem Übergangsbereich zwischen einem scharfkantigen und einem gerundeten Muldenrandbereich schneiden, um das Entstehen weiterer scharfer Kanten zu vermeiden.

Verfahrensmäßig wird zur Herstellung der Verbrennungsmulde in einem ersten Verfahrensschritt mit einem Drehwerkzeug eine Verbrennungsmulde mit einer umlaufenden Hinterschneidung und einem umlaufenden Muldenrand in den Kolbenboden eingedreht, wobei in einem zweiten Verfahrensschritt zur Herstellung der gerundeten und scharfkantigen Muldenrandbereiche das Drehwerkzeug ausgehend vom Mittelpunkt der Verbrennungsmulde um einen definierten Betrag geradlinig radial nach außen versetzt wird.

Zweckmäßige Weiterbildungen sind aus den weiteren Unteransprüchen zu entnehmen.

Ein Ausführungsbeispiel der Erfindung wird im Folgenden anhand der beigefügten Zeichnungen näher erläutert. Es zeigen in einer schematischen, nicht maßstabsgetreuen Darstellung:
- Fig. 1: eine Draufsicht auf ein Ausführungsbeispiel des erfindungsgemäßen Kolbens;
- Fig. 2: eine teilweise geschnittene Seitenansicht in Richtung des Pfeils A in Fig. 1;
- Fig. 3: eine teilweise geschnittene Seitenansicht in Richtung des Pfeils C in Fig. 1.

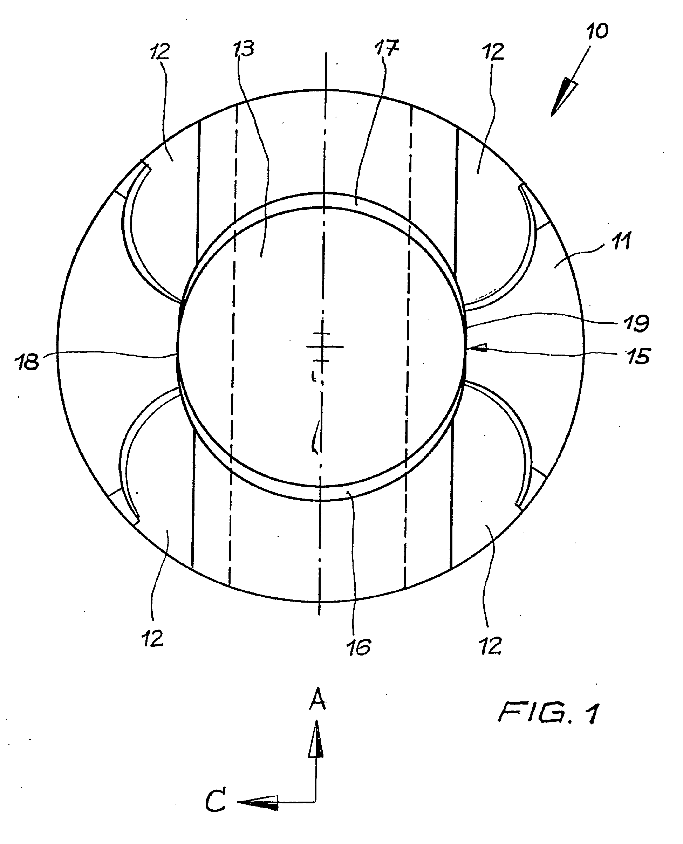

Die Fig. 1 bis 3 zeigen ein Ausführungsbeispiel eines erfindungsgemäßen Kolbens 10 mit einem Kolbenboden 11, der mit einer Verbrennungsmulde 13 versehen ist. Der Mittelpunkt der Verbrennungsmulde 13 liegt im Ausführungsbeispiel in der Kolbenlängsachse, das heißt, die Verbrennungsmulde 13 ist gegenüber der Kolbenlängsachse nicht versetzt. Zwischen der Verbrennungsmulde 13 und dem äußeren Rand des Kolbenbodens 11 sind vier Ventilnischen 12 im Kolbenboden 10 angeordnet.

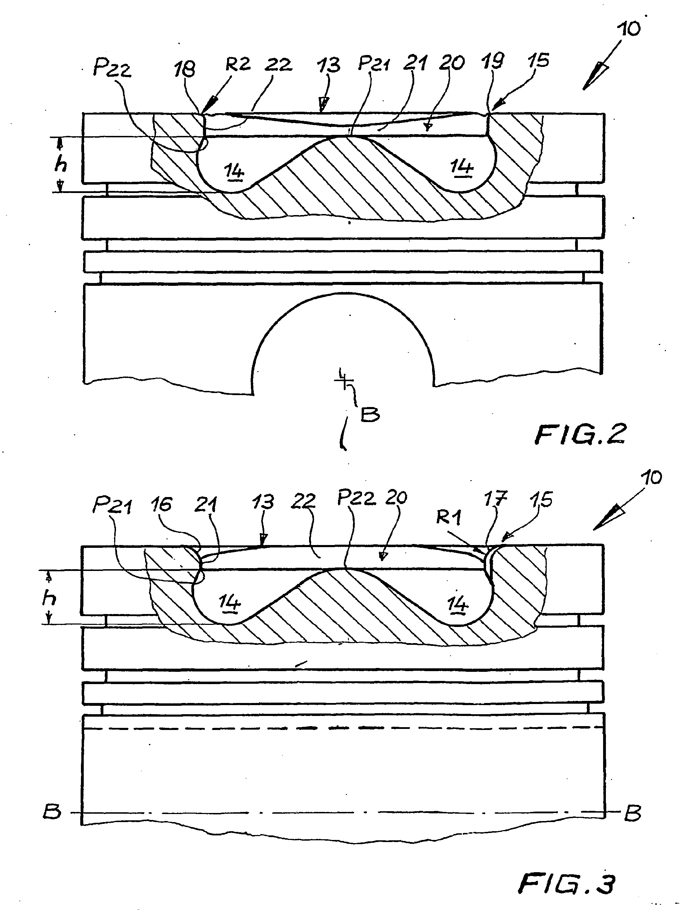

Die Verbrennungsmulde 13 ist mit einer umlaufenden Hinterschneidung 14 versehen (siehe Fig. 2 und 3). Der umlaufende Muldenrand 15 der Verbrennungsmulde 13 weist zwei gerundete Muldenrandbereiche 16, 17 und zwei scharfkantige Muldenrandbereiche 18, 19 auf. Die gerundeten Muldenrandbereiche 16, 17 einerseits und die scharfkantigen Muldenrandbereiche 18, 19 andererseits sind jeweils einander gegenüberliegend angeordnet, wobei die gerundeten Muldenrandbereiche 16, 17 jeweils symmetrisch zur Kolbenbolzenachse B angeordnet sind. (siehe Fig. 1).

Aus Fig. 1 ist ferner ersichtlich, dass jede der vier Ventilnischen 12 so im Kolbenboden 11 angeordnet ist, dass sie den umlaufenden Muldenrand 15 im Übergangsbereich zwischen einem gerundeten Muldenrandbereich 16 bzw. 17 und einem scharfkantigen Muldenrandbereich 18, 19 schneidet.

Die gerundeten Muldenrandbereiche 16, 17 weisen im Ausführungsbeispiel einen Radius R₁ von 2,5 mm auf, wobei der Radius R₁ in einem Bereich von 2,0 bis 3,0 mm variieren kann (siehe Fig. 3). Die scharfkantigen Muldenrandbereiche 18, 19 weisen im Ausführungsbeispiel einen Radius R₂ von 1,0 mm auf, wobei der Radius R₂ in einem Bereich von 0,5 bis 1,5 mm variieren kann (siehe Fig. 2).

Aus den Fig. 2 und 3 ist ferner ersichtlich, dass der umlaufende Muldenrand 15 in eine ebene umlaufenden Fläche 20 übergeht. Dabei gehen die gerundeten Muldenrandbereiche 16, 17 in einen ebenen Flächenbereich 21 geringerer Höhe und die scharfkantigen Muldenrandbereiche 18, 19 in einen ebenen Flächenbereich 22 größerer Höhe über. Die ebenen Flächenbereiche 21, 22 sind im Ausführungsbeispiel vertikal, das heißt, parallel zur Kolbenlängsachse, ausgerichtet und bilden eine Zylindermantelfläche.

Die ebenen Flächenbereiche 21, 22 gehen jeweils an einem definierten Punkt P₂₁, P₂₂ scharfkantig, d.h. im Wesentlichen ohne Rundung, in die umlaufende Hinterschneidung 14 über. Die Punkte P₂₁, P₂₂ weisen im Ausführungsbeispiel jeweils den gleichen Abstand h zum Boden der Verbrennungsmulde 13 auf. Daraus folgt, dass die Höhe der ebenen Flächenbereiche 21, 22 von der Größe der Radien R₁ bzw. R₂ abhängt. Je größer die Radien R₁ bzw. R₂ sind, desto geringer ist die Höhe der ebenen Flächenbereiche 21, 22. Das bedeutet, dass die sich an die gerundeten Muldenrandbereiche 16, 17 anschließenden ebenen Flächenbereiche 21 stets eine geringere Höhe aufweisen als die sich an die scharfkantigen Muldenrandbereiche 18, 19 anschließenden ebenen Flächenbereiche 22.

Der resultierende umlaufende Muldenrand 15 setzt sich demnach zusammen aus alternierenden gerundeten Muldenrandbereichen 16, 17 und scharfkantigen Muldenrandbereichen 18, 19, die im Ausführungsbeispiel fließend ineinander übergehen. Der umlaufende Muldenrand 15 geht über in eine ebene umlaufende Fläche 20, die sich aus alternierenden ebenen Flächenbereichen 21 geringerer Höhe und ebenen Flächenbereichen 22 größerer Höhe zusammensetzt, wobei die ebenen Flächenbereiche 21, 22 im Ausführungsbeispiel ebenfalls fließend ineinander übergehen. Die ebene umlaufende Fläche 20 stellt sicher, dass der in den Brennraum eines Zylinders eingespritzte Kraftstoff unabhängig von der Art und Anordnung der Kraftstoffeinspritzdüse stets auf einen ebenen Flächenbereich 21, 22 auftrifft und damit besonders fein zerstäubt wird. Gleichzeitig sorgen die gerundeten Muldenrandbereiche 16, 17 für eine Minderung der im umlaufenden Muldenrand 15 auftretenden Zug- bzw. Druckspannungen.

## Patentansprüche

1. Kolben (10) für einen Verbrennungsmotor, mit einer im Kolbenboden (11) vorgesehenen Verbrennungsmulde (13), die eine umlaufende Hinterschneidung (14) aufweist, wobei der die Hinterschneidung (14) mit dem Kolbenboden (11) verbindende umlaufende Muldenrand (15) alternierend gerundete (16, 17) und scharfkantige Muldenrandbereiche (18, 19) aufweist, **dadurch gekennzeichnet, dass** der umlaufende Muldenrand (15) entlang seines gesamten Umfangs in eine ebene umlaufende Fläche (20) übergeht, die ihrerseits entlang ihres gesamten Umfangs scharfkantig in die Hinterschneidung (14) übergeht.

2. Kolben nach Anspruch 1, **dadurch gekennzeichnet, dass** die Höhe der ebenen umlaufenden Fläche (20) entlang der gerundeten Muldenrandbereiche (16, 17) geringer ist als entlang der scharfkantigen Muldenrandbereiche (18, 19).

3. Kolben nach Anspruch 2, **dadurch gekennzeichnet, dass** die ebenen Flächenbereiche (21) geringerer Höhe und die ebenen Flächenbereiche (22) größerer Höhe fließend ineinander übergehen.

4. Kolben nach einem der vorhergehenden Ansprüche, **dadurch gekennzeichnet, dass** die ebene umlaufende Fläche (20) eine Zylindermantelfläche bildet.

5. Kolben nach einem der vorhergehenden Ansprüche, **dadurch gekennzeichnet, dass** die gerundeten (16,17) und die scharfkantigen Muldenrandbereiche (18, 19) fließend ineinander übergehen.

6. Kolben nach einem der vorhergehenden Ansprüche, **dadurch gekennzeichnet, dass** die gerundeten Muldenrandbereiche (16, 17) einen Radius von 2,0 bis 3.0 mm, vorzugsweise 2,4 bis 2,6 mm, aufweisen.

7. Kolben nach einem der vorhergehenden Ansprüche, **dadurch gekennzeichnet, dass** die scharfkantigen Muldenrandbereiche (18, 19) einen Radius von 0,5 bis 1,5 mm, vorzugsweise 0,75 bis 1,25 mm, aufweisen.

8. Kolben nach einem der vorhergehenden Ansprüche, **dadurch gekennzeichnet, dass** der Mittelpunkt der Verbrennungsmulde (13) in der Kolbenlängsachse liegt.

9. Kolben nach einem der vorhergehenden Ansprüche, **dadurch gekennzeichnet, dass** der umlaufende Muldenrand (15) zwei in der Kolbenbolzenachse (B) einander gegenüberliegende gerundete Muldenrandbereiche (16, 17) und zwei senkrecht zur Kolbenbolzenachse (B) einander gegenüberliegende scharfkantige Muldenrandbereiche (18, 19) aufweist.

10. Kolben nach einem der vorhergehenden Ansprüche, **dadurch gekennzeichnet, dass** der Kolbenboden (11) mit einer oder mehreren Ventilnischen (12) versehen ist.

11. Kolben nach Anspruch 10, **dadurch gekennzeichnet, dass** jede Ventilnische (12) die Verbrennungsmulde (13) in einem Übergangsbereich zwischen einem scharfkantigen (18, 19) und einem gerundeten Muldenrandbereich (16, 17) schneidet.

12. Verfahren zur Herstellung eines Kolbens (10) nach einem der Ansprüche 1 bis 11**, dadurch gekennzeichnet, dass** in einem ersten Verfahrensschritt mit einem Drehwerkzeug eine Verbrennungsmulde mit einer umlaufenden Hinterschneidung und einem umlaufenden Muldenrand in den Kolbenboden (11) eingedreht wird und dass in einem zweiten Verfahrensschritt zur Herstellung der gerundeten (16, 17) und scharfkantigen Muldenrandbereiche (18, 19) das Drehwerkzeug ausgehend vom Mittelpunkt der Verbrennungsmulde um einen definierten Betrag geradlinig radial nach außen versetzt wird.

13. Verfahren nach Anspruch 12, **dadurch gekennzeichnet, dass** das Drehwerkzeug um den Betrag von 0,5 bis 2,5 mm, vorzugsweise 1 mm bis 2 mm, versetzt wird.

14. Verfahren nach Anspruch 12 oder 13, **dadurch gekennzeichnet, dass** das Drehwerkzeug beidseitig zum Mittelpunkt der Verbrennungsmulde entlang der Kolbenbolzenachse (B) versetzt wird.

15. Verfahren nach einem der Ansprüche 12 bis 14, **dadurch gekennzeichnet, dass** im ersten Verfahrensschritt die Verbrennungsmulde zentrisch zur Kolbenlängsachse in den Kolbenboden (11) eingedreht wird.

## Claims

1. Piston (10) for an internal combustion engine with a combustion bowl (13) provided in the piston crown (11) and having an all-round undercut (14), where the all-round bowl rim (15) connecting the undercut (14) to the piston crown (11) has alternating rounded (16, 17) and sharp-edged (18, 19) bowl rim areas, **characterized in that** the all-round bowl rim (15) merges along its entire periphery with a flat and all-round surface (20) which in turn merges along its entire periphery with the undercut (14) in a sharp edge.

2. Piston according to Claim 1, **characterized in that** the height of the flat all-round surface (20) along the rounded bowl rim areas (16, 17) is less than that along the sharp-edged bowl rim areas (18, 19).

3. Piston according to Claim 2**, characterized in that** the flat surface areas (21) of lesser height and the flat surface areas (22) of greater height merge smoothly into one another.

4. Piston according to one of the preceding claims, **characterized in that** the flat all-round surface (20) forms a cylinder jacket surface.

5. Piston according to one of the preceding claims, **characterized in that** the rounded (16, 17) and the sharp-edged (18, 19) bowl rim areas merge smoothly into one another.

6. Piston according to one of the preceding claims, **characterized in that** the rounded bowl rim areas (16, 17) have a radius of 2.0 to 3.0 mm, preferably 2.4 to 2.6 mm.

7. Piston according to one of the preceding claims, **characterized in that** the sharp-edged bowl rim areas (18, 19) have a radius of 0.5 to 1.5 mm, preferably 0.75 to 1.25 mm.

8. Piston according to one of the preceding claims, **characterized in that** the centre-point of the combustion bowl (13) is in the piston longitudinal axis.

9. Piston according to one of the preceding claims, **characterized in that** the all-round bowl rim (15) has two opposite and rounded bowl rim areas (16, 17) in the piston pin longitudinal axis (B) and two opposite and sharp-edged bowl rim areas (18, 19) vertical to the piston pin longitudinal axis (B).

10. Piston according to one of the preceding claims, **characterized in that** the piston crown (11) is provided with one or more valve niches (12).

11. Piston according to Claim 10, **characterized in that** each valve niche (12) intersects the combustion bowl (13) in a transitional area between a sharp-edged (18, 19) and a rounded (16, 17) bowl rim area.

12. Method for production of a piston (10) according to one of Claims 1 to 11, **characterized in that** in a first method step a lathe tool is used to machine a combustion bowl with an all-round undercut and an all-round bowl rim in the piston crown (11) and **in that** in a second method step for production of the rounded (16, 17) and the sharp-edged (18, 19) bowl rim areas the lathe tool is offset in a straight line and radially outwards by a defined amount starting from the centre-point of the combustion bowl.

13. Method according to Claim 12, **characterized in that** the lathe tool is offset by an amount from 0.5 to 2.5 mm, preferably 1 mm to 2 mm.

14. Method according to Claim 12 or Claim 13, **characterized in that** the lathe tool is offset on both sides from the centre-point of the combustion bowl along the piston pin axis (B).

15. Method according to one of Claims 12 to 14, **characterized in that** in a first method step the combustion bowl is machined into the piston crown (11) centrally to the piston longitudinal axis.

## Revendications

1. Piston (10) pour un moteur à combustion, avec une cavité de combustion (13) prévue dans le fond (11) du piston et présentant une contre-dépouille circonférentielle (14), sachant que le bord circonférentiel (15) de la cavité reliant la contre-dépouille (14) au fond (11) du piston présente en alternance des sections de bord arrondies (16, 17) et des sections de bord à arête vive (18, 19), **caractérisé en ce que** le bord circonférentiel (15) de la cavité se prolonge sur toute sa circonférence en une surface circonférentielle plane (20) qui se prolonge elle-même sur toute sa circonférence et sous forme d'arête vive en la contre-dépouille (14).

2. Piston selon la revendication 1, **caractérisé en ce que** la hauteur de la surface circonférentielle plane (20) est plus faible le long des sections de bord arrondies (16, 17) que le long des sections de bord à arête vive (18, 19).

3. Piston selon la revendication 2, **caractérisé en ce que** les sections de surface planes (21) présentant une plus faible hauteur et les sections de surface planes (22) présentant une hauteur plus importante se prolongent les unes dans les autres de manière continue.

4. Piston selon l'une des revendications précédentes, **caractérisé en ce que** la surface circonférentielle plane (20) forme une surface cylindrique.

5. Piston selon l'une des revendications précédentes, **caractérisé en ce que** les sections de bord arrondies (16, 17) et les sections de bord à arête vive (18, 19) se prolongent les unes dans les autres de manière continue.

6. Piston selon l'une des revendications précédentes, **caractérisé en ce que** les sections de bord arrondies (16, 17) présentent un rayon allant de 2,0 à 3,0 mm, de préférence de 2,4 à 2,6 mm.

7. Piston selon l'une des revendications précédentes, **caractérisé en ce que** les sections de bord à arête vive (18, 19) présentent un rayon allant de 0,5 à 1,5 mm, de préférence de 0,75 à 1,25 mm.

8. Piston selon l'une des revendications précédentes, **caractérisé en ce que** le point central de la cavité de combustion (13) se situe sur l'axe longitudinal du piston.

9. Piston selon l'une des revendications précédentes, **caractérisé en ce que** le bord circonférentiel (15) de la cavité présente deux sections de bord arrondies (16, 17) s'opposant dans l'axe de piston (B) et deux sections de bord à arête vive (18, 19) s'opposant verticalement par rapport à l'axe de piston (B).

10. Piston selon l'une des revendications précédentes, **caractérisé en ce que** le fond (11) du piston est doté d'un ou plusieurs logement(s) de soupape (12).

11. Piston selon la revendication 10, **caractérisé en ce que** chaque logement de soupape (12) coupe la cavité de combustion (13) dans une zone de transition entre une section de bord à arête vive (18, 19) et une section de bord arrondie (16, 17).

12. Procédé de fabrication d'un piston (10) selon l'une des revendications 1 à 11, **caractérisé en ce que,** dans une première étape de fabrication, une cavité de combustion dotée d'une contre-dépouille circonférentielle et d'un bord de cavité circonférentiel est fraisée dans le fond (11) du piston à l'aide d'un outil de tournage, et **en ce que**, dans une seconde étape de fabrication, l'outil de tournage est déplacé en ligne droite sur une distance définie et radialement vers l'extérieur à partir du centre de la cavité de combustion pour la fabrication des sections de bord arrondies (16, 17) et des sections de bord à arête vive (18, 19).

13. Procédé selon la revendication 12, **caractérisé en ce que** l'outil de tournage est déplacé de 0,5 à 2,5 mm, de préférence de 1 à 2 mm.

14. Procédé selon la revendication 12 ou 13, **caractérisé en ce que** l'outil de tournage est déplacé des deux côtés vers le point central de la cavité de combustion le long de l'axe de piston (B).

15. Procédé selon l'une des revendications 12 à 14, **caractérisé en ce que**, dans la première étape de fabrication, la cavité de combustion est fraisée de manière centrale par rapport à l'axe longitudinal du piston dans le fond (11) du piston.
